(19)

Europäisches
Patentamt
European
Patent Office
Office européen
des brevets

(11) **EP 3 862 241 A1**

(12) # EUROPEAN PATENT APPLICATION

(43) Date of publication:
**11.08.2021 Bulletin 2021/32**

(21) Application number: **21150227.3**

(22) Date of filing: **05.01.2021**

(51) Int Cl.:
***B60W 30/18*** (2012.01)   ***G05D 1/02*** (2020.01)
***B60W 40/114*** (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.02.2020   CN 202010081762**

(71) Applicant: **Beijing Baidu Netcom Science and
Technology Co., Ltd.
Beijing 100085 (CN)**

(72) Inventors:
• **MA, Lin
Beijing 100085 (CN)**

• **FU, Xiaoxin
Beijing 100085 (CN)**
• **ZHU, Zhenguang
Beijing 100085 (CN)**
• **CHEN, Zhiyuan
Beijing 100085 (CN)**
• **Li, Xujian
Beijing 100085 (CN)**

(74) Representative: **advotec.
Patent- und Rechtsanwaltspartnerschaft
Tappe mbB
Widenmayerstraße 4
80538 München (DE)**

(54) **METHOD AND APPARATUS FOR PLANNING PATH FOR LANE CHANGING, ELECTRONIC DEVICE AND COMPUTER READABLE MEDIUM**

(57)    Embodiments of the present disclosure provide a method and an apparatus for planning a path for lane changing, an electronic device, and a computer readable medium. The method includes: determining (S101), based on position information of a detected obstacle, a reference position to be passed by a vehicle when the vehicle detours the obstacle; estimating (S102) an end position of the vehicle detouring the obstacle based on a positional relationship between the vehicle and the obstacle; and determining (S103) a path of the vehicle to detour the obstacle based on a current position of the vehicle, the reference position and the end position.

determining, based on position information of a detected obstacle, a reference position to be passed by a vehicle when the vehicle detours the obstacle — S101

estimating an end position of the vehicle detouring the obstacle based on a positional relationship between the vehicle and the obstacle; — S102

determining a path of the vehicle to detour the obstacle based on a current position of the vehicle, the reference position and the end position — S103

FIG. 2

EP 3 862 241 A1

**Description**

**FIELD**

Embodiments of the present disclosure relate to a field of autonomous driving technologies, and more particularly to a method and an apparatus for plan a path for lane changing, an electronic device, and a computer readable medium.

**BACKGROUND**

With development of computer technologies and artificial intelligence, an autonomous vehicle has a broad application prospect in transportation, military affairs, logistics storage, daily life and so on.

Path planning is a key part of autonomous driving technologies, which is based on environmental data of a perceptual system. A vehicle needs to plan a safe and reliable path, that is, a shortest and collision-free path from a start position to a target position in a complex road environment based on certain performance indicators. Meanwhile, it is necessary to ensure that the vehicle has a certain safe distance to an obstacle during driving.

**SUMMARY**

Embodiments of the present disclosure provide a method and an apparatus for plan a path for lane changing, an electronic device, and a computer readable medium, which may ensure that the vehicle has a certain safe distance to an obstacle during driving in the path.

In a first aspect, embodiments of the present disclosure provide a method for plan a path for lane changing. The method includes: determining, based on position information of a detected obstacle, a reference position to be passed by a vehicle when the vehicle detours the obstacle; estimating an end position of the vehicle detouring the obstacle by a positional relationship between the vehicle and the obstacle; and determining a path of the vehicle to detour the obstacle based on a current position of the vehicle, the reference position and the end position.

In a second aspect, embodiments of the present disclosure provide an apparatus for plan a path for lane changing. The apparatus includes: a reference position determining module, an end position estimating module and a driving path selecting module. The reference position determining module is configured to determine, based on position information of a detected obstacle, a reference position to be passed by a vehicle when the vehicle detours the obstacle. The end position estimating module is configured to estimate an end position of the vehicle detouring the obstacle by a positional relationship between the vehicle and the obstacle. The driving path selecting module is configured to determine a path of the vehicle to detour the obstacle based on a current position of the vehicle, the reference position and the end position.

In a third aspect, embodiments of the present disclosure provide an electronic device. The electronic device includes: one or more processors, a storage device and one or more I/O interfaces. The storage device has one or more programs stored thereon. When the one or more programs are executed by the one or more processors, the one or more processors are caused to implement the method for plan a path for lane changing according to any one of the above. The one or more I/O interfaces are coupled between the one or more processors and the storage device, and configured to implement information interaction between the one or more processors and the storage device,

In a fourth aspect, embodiments of the present disclosure provide a computer readable medium. The computer readable medium has a computer program stored thereon. The method for plan a path for lane changing according to any one of the above is implemented when the computer program is executed by a processor.

With the method and the apparatus for plan a path for lane changing, the electronic device, and the computer readable medium, the reference position to be passed by the vehicle when the vehicle detours the obstacle is calculated, and the end position of the vehicle detouring the obstacle is estimated based on the positional relationship between the vehicle and the obstacle, thereby the path of the vehicle to detour the obstacle is planned, keeping a safe distance between the vehicle and the detected obstacle during driving.

**BRIEF DESCRIPTION OF THE DRAWINGS**

The accompanying drawings are used to provide a further understanding for embodiments of the present disclosure and constitute a part of the specification, and are used to explain the present disclosure together with the embodiments of the present disclosure, but do not constitute a limitation of the present disclosure. The above and other features and advantages may become more apparent to the skilled in the art by describing detailed exemplary embodiments with reference to the accompanying drawings, in which:

FIG. 1 is a schematic diagram illustrating a scene where an autonomous vehicle detours an obstacle during lane

EP 3 862 241 A1

changing according to an embodiment of the present disclosure;

FIG. 2 is a flow chart illustrating a method for plan a path for lane changing according to an embodiment of the present disclosure;

FIG. 3 is a block diagram illustrating an apparatus for plan a path for lane changing according to an embodiment of the present disclosure;

FIG. 4 is a block diagram illustrating an electronic device according to an embodiment of the present disclosure; and

FIG. 5 is a block diagram illustrating a computer readable medium according to an embodiment of the present disclosure.

## DETAILED DESCRIPTION

In order to enable the skilled in the art to better understand the technical solution of the present disclosure, description may be made in detail below to a method and an apparatus for plan a path for lane changing, an electronic device and a computer readable medium provided by the present disclosure with reference to the accompanying drawings.

Exemplary embodiments may be described more fully below with reference to the accompanying drawings, but may be embodied in different forms and should not be construed as a limitation of embodiments set forth herein. On the contrary, these provided embodiments aim to enable the present disclosure thorough and complete, and enable the skilled in the art to fully understand the scope of the present disclosure. Each embodiments of the present disclosure and the features in the embodiments may be combined with each other without conflict.

A vehicle described in embodiments of the present disclosure may be an autonomous vehicle or a self-driving automobile. The vehicle may be configured to be in an autonomous driving mode. In the autonomous driving mode, the vehicle may be navigated to pass through an environment with little or no input from a driver. In following embodiments, the vehicle may also be called an ego car, that is, a vehicle that may sense the environment with an angle of itself and plan a path for lane changing with itself as the center.

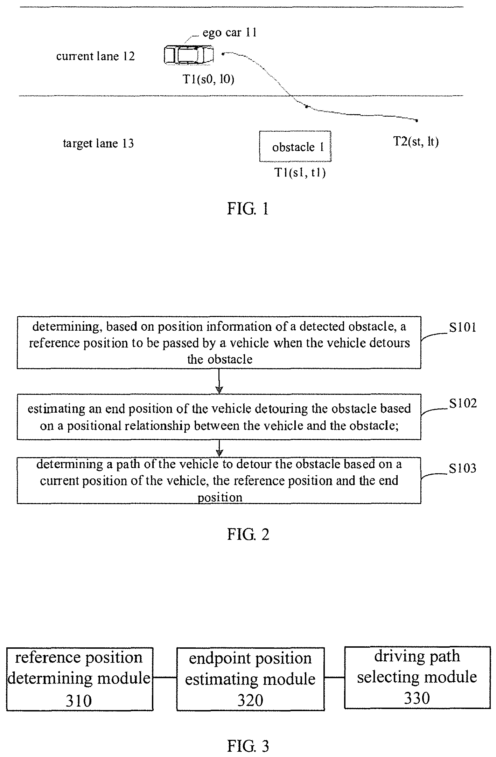

FIG. 1 is a schematic diagram illustrating a scene where an autonomous vehicle detours an obstacle during lane changing according to an embodiment of the present disclosure. In the scene illustrated in FIG. 1, a current lane 12, a target lane 13 and an obstacle 1 located in the target lane 13 are schematically illustrated during lane changing process of the ego car 11 of the autonomous vehicle.

In embodiments of the present disclosure, during the driving process of the ego car 11, the ego car 11 may detect position information and a motion state of the ego car 11, and may detect position information and a motion state of the obstacle. For example, the motion state may include information such as a motion direction and a motion velocity.

In an embodiment, a coordinate system may be constructed based on a direction along a road centerline (referred as a vertical direction) during driving process of the vehicle drives and a direction perpendicular to the road centerline (referred as a horizontal direction), thereby the position information of the ego car 11 and the position information of the detected obstacle in the constructed coordinate system are determined.

FIG. 1 exemplarily illustrates a current position T1(s0, 10) of the ego car 11, a reference position T2(s1, 11) to be passed by the ego car when the ego car 11 detours the first obstacle 1, and an estimated end position T3(st, It) of the vehicle detouring the first obstacle 1.

The first obstacle 1 includes two boundaries: one boundary close to the ego car 11 and the other boundary far away from the ego car 11. In addition, a predetermined deviation distance may be maintained between the ego car 11 and the boundary of the first obstacle 1 close to the ego car 11 in the direction perpendicular to the road centerline.

With the method for plan a path for lane changing, by utilizing the reference position, an end position where the obstacle may be avoided may be determined, and a driving path where the obstacle may be avoided may be planned.

It should be noted that, the actual scene for planning a path for lane changing illustrated in FIG. 1 may be an application scene of planning a path for lane changing on an expressway, a medium and low speed highway, or other application scene, which is not limited in embodiments of the present disclosure.

FIG. 2 is a flow chart illustrating a method for plan a path for lane changing according to an embodiment of the present disclosure. As illustrated in FIG. 2, the method for plan a path for lane changing includes following.

At block S110, a reference position to be passed by a vehicle when the vehicle detours an obstacle is determined based on position information of the obstacle.

At block S120, an end position of the vehicle detouring the obstacle is estimated based on a positional relationship between the vehicle and the obstacle.

At block S130, a path of the vehicle to detour the obstacle is determined based on a current position of the vehicle, the reference position and the end position.

In a solution of embodiments of the present disclosure, the end position of the vehicle detouring the obstacle may be estimated based on the positional relationship between the obstacle and the ego car, thereby a path starting from the current position of the vehicle and passing through the reference position and the end position is planned, keeping a safe distance between the ego car and the detected obstacle during driving.

3

In an embodiment, before determining the reference position to be passed by the vehicle when the vehicle detours the obstacle based on the position information of the obstacle, the method also includes: detecting the position information of the obstacle and a motion state of the obstacle before the vehicle starts lane changing.

The solution of embodiments of the present disclosure may be applied to a lane changing scene in autonomous driving, the position information of the obstacle and the motion state of the obstacle may be detected before the vehicle starts the lane changing, the end position of the lane changing is estimated by utilizing the position information of the obstacle, and a path that may avoid the obstacle is planned.

In an embodiment, actions at block S110 may include: S21, obtaining a boundary position of the obstacle close to the vehicle from the position of the obstacle; and S22, calculating a position with a predetermined deviation distance from the boundary position, to obtain the reference position to be passed by the vehicle when the vehicle detours the obstacle.

In an embodiment, the predetermined deviation distance is a preset spacing distance between the obstacle and the vehicle in a direction perpendicular to a road centerline, and the predetermined deviation distance is greater than 0.

As an example, estimating position information of a position point to be detoured by utilizing the position of the detected obstacle may be expressed as a following expression (1):

$$(s1, \ l1) = \left(s_{center}, \ l\_center + nudge\_buffer\right) \qquad (1),$$

where, $s_{center}$ represents position information of the detected obstacle in the direction along the road centerline, l_center represents position information of the obstacle in the direction perpendicular to the road centerline, and nudge_buffer represents the deviation distance between the vehicle and the obstacle in the direction perpendicular to the road centerline.

It may be known from the expression (1) that, in this embodiment, by setting the predetermined deviation distance, a degree of keeping a safe distance between the vehicle and the obstacle may be adjusted, thereby ensuring that the obstacle may be avoided during normal driving or lane changing.

In an embodiment, the method for plan a path for lane changing may include: estimating the end position of the vehicle detouring the obstacle based on the current position and a motion state of the vehicle, as well as the position information and the motion state of the detected obstacle.

In this embodiment, estimating the end position of the vehicle detouring the obstacle may include: S31, determining the positional relationship between the vehicle and the obstacle while the vehicle is driving based on the current position and the motion state of the vehicle, as well as the position information and the motion state of the obstacle; and S32, estimating the end position of the vehicle detouring the obstacle by utilizing the positional relationship between the vehicle and the obstacle while the vehicle is driving.

In the method for plan a path for lane changing, when the obstacle is static, the position of the obstacle is fixed and the motion state of the obstacle is a static state. When the obstacle is dynamic, the positional relationship between the vehicle and the obstacle changes dynamically with the driving procedure of the vehicle. The end position of the vehicle which may avoid the obstacle during lane changing is estimated based on a dynamic positional relationship between the vehicle and the obstacle.

In an embodiment, estimating the end position that may avoid the obstacle during the lane changing may include: training a model for estimating the end position of the vehicle detouring the obstacle by utilizing positions of a vehicle, motion states of the vehicle, positions of an obstacle and motion states of the obstacle in advance, and estimating the end position of the vehicle that may avoid the obstacle by utilizing the trained model.

In an embodiment, actions at block S130 may include: S41, taking the current position of the vehicle, the reference position and the end position as trajectory points on the path of the vehicle detouring the obstacle; S42, calculating a driving angular velocity of the vehicle from the current position to the end position in a direction along the road centerline; and S43, establishing a path passing through the trajectory points at the driving angular velocity as the path of the vehicle to detour the obstacle.

In an embodiment, actions at block S42 may include: S51, calculating a driving path length of the vehicle from the current position to the end position in the direction along the road centerline based on a distance between the current position of the vehicle and the estimated end distance; S52, calculating a driving linear velocity of the vehicle based on the motion state of the vehicle and the path length; and S53, calculating the driving angular velocity of the vehicle from the current position to the end position by utilizing a conversion relationship between the driving linear velocity and the driving angular velocity.

As an example, a constructed curve of the ego car detouring (or moving around) the obstacle may be represented as an expression (2):

$$\begin{cases} f\!s = a(1 + cos(\,bs + c)\,\,) \\ f\!s0 = l0 \\ f\!s1 = l1 \\ f\!st = lt \\ b = 2\pi / T \\ T = 2(\,st - s0) \end{cases} \quad (2),$$

where, $f\!s = a(1 + cos(bs + c))$ represents a curve function of the ego car moving around the obstacle, in which, $a$, $b$ and $c$ are respectively parameters of the curve function. The curve function may meet: $f\!s0 = l0$, which represents that the curve function may pass through a start position point T1(s0, l0) of the vehicle; $f\!s1 = l1$, which represents that the curve function may pass through a reference position T2(s1, l1) to be passed by the ego car when the ego car detours the obstacle; and $f\!st = lt$, which represents that the curve function may pass through an estimated end position T3(st, lt) of the vehicle detouring the obstacle.

Moreover, in the expression (2), $st - s0$ represents the driving path length of the vehicle from the current position to the end position in the direction along the road centerline , and b represents the driving angular velocity of the vehicle from the current position to the end position.

In an embodiment, the parameters a, b and c for constructing the curve of the vehicle detouring the obstacle are obtained by solving the above expression (2), in which,

$$a = \frac{l0 - lt}{2} \quad \text{and} \quad b = \frac{\arccos \dfrac{l0}{a} - 1 - \arccos \; (\dfrac{l1}{a} - 1)}{s0 - s1}.$$

It may be known from the above description that, b represents the driving angular velocity of the vehicle detouring the obstacle. The driving angular velocity may be used to measure somatosensory and linear stability of the vehicle during driving. A value of b depends on the positional relationship between the vehicle and the obstacle. The positional relationship includes both position relationship between the vehicle and the obstacle in the direction along the road centerline and position relationship between the vehicle and the obstacle in the direction perpendicular to the road centerline.

Therefore, based on the method for plan a path for lane changing of embodiments of the present disclosure, , the distance for lane changing may be estimated by utilizing the position information of the obstacle at the start of the lane changing, and the path for lane changing may be planned in combination with the positional relationship between the obstacle and the vehicle, thereby avoiding the obstacle, ensuring the safety during lane changing, and implementing the optimal somatosensory and linear stability.

FIG. 3 is a block diagram illustrating an apparatus for plan a path for lane changing according to embodiments of the present disclosure. As illustrated in FIG. 3, the apparatus for plan a path for lane changing includes a reference position determining module 310, an end position estimating module 320 and a driving path selecting module 330.

The reference position determining module 310 is configured to determine, based on position information of a detected obstacle, a reference position to be passed by a vehicle when the vehicle detours the obstacle.

The end position estimating module 320 is configured to estimate an end position of the vehicle detouring the obstacle by a positional relationship between the vehicle and the obstacle.

The driving path selecting module 330 is configured to determine a path of the vehicle to detour the obstacle based on a current position of the vehicle, the reference position and the end position.

With the apparatus for plan a path for lane changing according to embodiments of the present disclosure, the end position of the vehicle detouring the obstacle is estimated based on the positional relationship between the vehicle and the obstacle, thereby a path staring from the current position of the vehicle and passing through the reference position and the end position is planned, keeping a safe distance between the vehicle and the detected obstacle during driving.

In an embodiment, the apparatus for plan a path for lane changing may also include an information detecting module, configured to detect the position information of the obstacle and a motion state of the obstacle before the vehicle starts lane changing.

In an embodiment, the reference position determining module 310 may include: a boundary position obtaining unit and a reference position calculating unit. The boundary position obtaining unit is configured to obtain a boundary position of the obstacle close to the vehicle from the position information of the obstacle. The reference position calculating unit is configured to calculate a position with a predetermined deviation distance from the boundary position, to obtain the reference position to be passed by the vehicle when the vehicle detours the obstacle.

In an embodiment, the predetermined deviation distance is a preset spacing distance between the obstacle and the vehicle in a direction perpendicular to a road centerline, and the predetermined deviation distance is greater than 0.

In an embodiment, the end position estimating module 320 may also be configured to estimate the end position of the vehicle detouring the obstacle based on the current position and a motion state of the vehicle, as well as the position and a motion state of the obstacle.

In an embodiment, the end position estimating module 320 may also include: a positional relationship determining unit, configured to determine the positional relationship between the vehicle and the obstacle while the vehicle is driving based on the current position and the motion state of the vehicle, and the position and the motion state of the obstacle. The end position estimating module 320 may also be configured to estimate the end position of the vehicle detouring the obstacle by utilizing the positional relationship between the vehicle and the obstacle while the vehicle is driving.

In an embodiment, the driving path selecting module 330 may include: a trajectory point determining unit, an angular velocity calculating unit and a path establishing unit. The trajectory point determining unit is configured to take the current position of the vehicle, the reference position and the end position as trajectory points on the path of the vehicle detouring the obstacle. The angular velocity calculating unit is configured to calculate a driving angular velocity of the vehicle from the current position to the end position in a direction along the road centerline. The path establishing unit is configured to establish a path passing through the trajectory points at the driving angular velocity as the path of the vehicle to detour the obstacle.

In an embodiment, the angular velocity calculating unit may include: a driving length calculating subunit, a linear velocity calculating subunit and an angular velocity calculating subunit. The driving length calculating subunit is configured to calculate a driving path length of the vehicle from the current position to the end position in the direction along the road centerline based on a distance between the current position of the vehicle and the estimated end position. The linear velocity calculating subunit is configured to calculate a driving linear velocity of the vehicle based on the motion state of the vehicle and the driving path length. The angular velocity calculating subunit is configured to calculate the driving angular velocity of the vehicle from the current position to the end position by utilizing a conversion relationship between the driving linear velocity and the driving angular velocity.

With the apparatus for plan a path for lane changing according to embodiments of the present disclosure, at the start of lane changing, the distance for lane changing may be estimated by utilizing the position information of the obstacle at the start of the lane changing, and the path for lane changing may be planned in combination with the positional relationship between the obstacle and the vehicle, thereby avoiding the obstacle, ensuring the safety during lane changing, and implementing optimal somatosensory and linear stability.

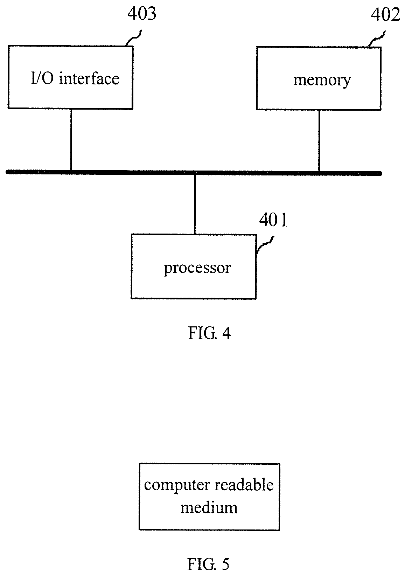

FIG. 4 is a block diagram illustrating an electronic device according to embodiments of the present disclosure. As illustrated in FIG. 4, embodiments of the present disclosure provide an electronic device 400. The electronic device includes one or more processors 401, a memory 402, and one or more I/O (input/output) interfaces 403. The memory 402 has one or more programs stored thereon. When the one or more programs are executed by the one or more processors, the one or more processors are caused to implement the method for plan a path for lane changing according to any one of the above. The I/O (input/output) interface 403 are coupled between the processor and the memory, and configured to implement information interaction between the processor and the memory.

The processor 401 is a component with data processing capability, including but not limited to a central processing unit (CPU). The memory 402 is a component with data storage capability, including but not limited to a random access memory (RAM, more specifically a SDRAM (synchronous dynamic random-access memory), DDR (double data rate), etc.), a read-only memory (ROM), an electrically erasable programmable read-only memory (EEPROM), and a flash memory. The I/O (input/output) interface 403 is coupled between the processor 401 and the memory 402, to implement the information interaction between the processor 401 and the memory 402, and include but not limit to a data bus.

In some embodiments, the processor 401, the memory 402, and the I/O interface 403 are coupled to each other by a bus 404, and further coupled to other components of the electronic device 500.

FIG. 5 is a block diagram illustrating a computer readable medium according to embodiments of the present disclosure. As illustrated in FIG. 5, embodiments of the present disclosure provide a computer readable medium having a computer program stored thereon. The computer program is configured to implement the method for plan a path for lane changing according to any one of the above when executed by a processor.

It may be understood by the skilled in the art that, all the methods or some of the functional modules/units in the device, the steps, and the system may be implemented as software, firmware, hardware and appropriate combinations thereof. In a hardware implementation, the division among the functional modules/units mentioned in the above description does not necessarily correspond to the division of physical components. For example, one physical component may have a plurality of functions, or one function or one step may be cooperatively performed by several physical components. Some or all of the physical components may be implemented as the software executed by a processor, such as a central processing unit, a digital signal processor or a microprocessor, as hardware, or as an integrated circuit, such as an application specific integrated circuit. Such software may be distributed on a computer-readable medium. The computer-readable medium may include a computer storage medium (or non-transitory medium) and a communication medium (or transitory medium). As well known to the skilled in the art, the term "computer storage medium" includes a volatile and nonvolatile medium and a removable and non-removable medium implemented in any method or technology for storing information such as computer readable instructions, data structures, program modules or other data. The computer storage medium includes, but is not limited to, a storage technology such as a RAM, a ROM, an EEPROM, or a flash memory, an optical disk storage such as a CD-ROM or a digital versatile disk (DVD), a magnetic storage device such as a magnetic box, a magnetic tape or magnetic disk storage, or any other medium that may be used to store desired information and accessed by a computer. Furthermore, it is well known to the skilled in the art that, the communication medium typically includes the computer readable instructions, the data structures, the program modules or other data in a modulated data signal such as a carrier wave or other transmission mechanism, and may include any information delivery media.

Exemplary embodiments are disclosed herein. Although detailed terms are employed, the terms are merely used and should merely be interpreted in a general illustrative sense, and are not used for the purpose of limitation. In some embodiments, it is obvious to the skilled in the art that the features, characteristics and/or elements described in connection with detailed embodiments may be used alone or in combination with features, characteristics and/or elements described in connection with other embodiments, unless explicitly stated otherwise. Therefore, it may be understood by the skilled in the art that, various changes in form and details may be made without departing from the scope of the present disclosure as set forth in the appended claims.

## Claims

1. A method for planning a path for lane changing, comprising:

   determining (S101), based on position information of a detected obstacle, a reference position to be passed by a vehicle when the vehicle detours the obstacle;
   estimating (S102) an end position of the vehicle detouring the obstacle based on a positional relationship between the vehicle and the obstacle; and
   determining (S103) a path of the vehicle to detour the obstacle based on a current position of the vehicle, the reference position and the end position.

2. The method of claim 1, wherein, before determining (S101) the reference position to be passed by the vehicle when the vehicle detours the detected obstacle based on the position information of the obstacle, the method further comprises:
   detecting the position information of the obstacle and a motion state of the obstacle before the vehicle starts lane changing.

3. The method of claim 1 or 2, wherein determining (S101) the reference position to be passed by the vehicle when the vehicle detours the detected obstacle based on the position information of the obstacle comprises:

   obtaining a boundary position of the obstacle close to the vehicle from the position information of the obstacle; and
   calculating a position with a predetermined deviation distance from the boundary position, to obtain the reference position to be passed by the vehicle when the vehicle detours the obstacle,
   wherein the predetermined deviation distance is a preset spacing distance between the obstacle and the vehicle in a direction perpendicular to a road centerline, and the predetermined deviation distance is greater than 0.

4. The method of any one of claims 1 to 3, wherein estimating (S102) the end position of the vehicle detouring the obstacle based on the positional relationship between the vehicle and the obstacle comprises:
   estimating the end position of the vehicle detouring the obstacle based on the current position and a motion state of the vehicle, and the position information and a motion state of the obstacle.

5. The method of claim 4, wherein the positional relationship between the vehicle and the obstacle while the vehicle is driving is determined based on the current position and a motion state of the vehicle, and the position information and a motion state of the obstacle.

6. The method of any of claims 1-5, wherein determining (S103) the path of the vehicle to detour the obstacle based on the current position of the vehicle, the reference position and the end position comprises:

taking the current position of the vehicle, the reference position and the end position as trajectory points on the path of the vehicle detouring the obstacle;
calculating a driving angular velocity of the vehicle from the current position to the end position in a direction along the road centerline; and
establishing a path passing through the trajectory points at the driving angular velocity as the path of the vehicle to detour the obstacle.

7. The method of claim 6, wherein calculating the driving angular velocity of the vehicle from the current position to the end position in the direction along the road centerline comprises:

calculating a driving path length of the vehicle from the current position to the end position in the direction along the road centerline based on a distance between the current position of the vehicle and the estimated end position;
calculating a driving linear velocity of the vehicle based on a motion state of the vehicle and the driving path length; and
calculating the driving angular velocity of the vehicle from the current position to the end position by utilizing a conversion relationship between the driving linear velocity and the driving angular velocity.

8. An apparatus for planning a path for lane changing, comprising:

a reference position determining module (310), configured to determine, based on position information of a detected obstacle, a reference position to be passed by a vehicle when the vehicle detours the obstacle;
an end position estimating module (320), configured to estimate an end position of the vehicle detouring the obstacle based on a positional relationship between the vehicle and the obstacle; and
a driving path selecting module (330), configured to determine a path of the vehicle to detour the obstacle based on a current position of the vehicle, the reference position and the end position.

9. The apparatus of claim 8, wherein the apparatus further comprises:
an information detecting module, configured to detect the position information of the obstacle and a motion state of the obstacle before the vehicle starts lane changing.

10. The apparatus of claim 8 or 9, wherein the reference position determining module (310) comprises:

a boundary position obtaining unit, configured to obtain a boundary position of the obstacle close to the vehicle from the position information of the obstacle; and
a reference position calculating unit, configured to calculate a position with a predetermined deviation distance from the boundary position, to obtain the reference position to be passed by the vehicle when the vehicle detours the obstacle,
wherein the predetermined deviation distance is a preset spacing distance between the obstacle and the vehicle in a direction perpendicular to a road centerline, and the predetermined deviation distance is greater than 0.

11. The apparatus of any one of claims 8 to 10, wherein the end position estimating module (320) is further configured to estimate the end position of the vehicle detouring the obstacle based on the current position and a motion state of the vehicle, and the position information and a motion state of the obstacle.

12. The apparatus of claim 8, wherein the end position estimating module (320) comprises:

a positional relationship determining unit, configured to determine the positional relationship between the vehicle and the obstacle while the vehicle is driving based on the current position and a motion state of the vehicle, and the position and a motion state of the obstacle,
wherein, the end position estimating module is further configured to estimate the end position of the vehicle detouring the obstacle by utilizing the positional relationship between the vehicle and the obstacle while the vehicle is driving.

13. An electronic device, comprising:

one or more processors;
a storage device having one or more programs stored thereon that, when executed by the one or more processors, cause the one or more processors to implement the method for planning a path for lane changing according to any one of claims 1-7; and
one or more I/O interfaces, coupled between the one or more processors and the storage device and configured to implement information interaction between the one or more processors and the storage device.

14. A computer readable medium having a computer program stored thereon, wherein the method for planning a path for lane changing according to any one of claims 1-7 is implemented when the computer program is executed by a processor.

15. A computer program having a computer program stored therein, wherein the method for planning a path for lane changing according to any one of claims 1-7 is implemented when the computer program is executed by a processor.

ego car 11

current lane 12

T1(s0, l0)

target lane 13

obstacle 1

T1(s1, t1)

T2(st, lt)

FIG. 1

| determining, based on position information of a detected obstacle, a reference position to be passed by a vehicle when the vehicle detours the obstacle | S101 |

| estimating an end position of the vehicle detouring the obstacle based on a positional relationship between the vehicle and the obstacle; | S102 |

| determining a path of the vehicle to detour the obstacle based on a current position of the vehicle, the reference position and the end position | S103 |

FIG. 2

| reference position determining module 310 | endpoint position estimating module 320 | driving path selecting module 330 |

FIG. 3

403

402

| I/O interface | | memory |

401

| processor |

FIG. 4

| computer readable medium |

FIG. 5

Europäisches
Patentamt

European
Patent Office

Office européen
des brevets

# EUROPEAN SEARCH REPORT

Application Number

EP 21 15 0227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 562 376 A (FORD GLOBAL TECH LLC [US]) 14 November 2018 (2018-11-14) * paragraphs [0001], [0041], [0048], [0061], [0069] - [0079]; figures 2-6 * ----- | 1-15 | INV. B60W30/18 G05D1/02 B60W40/114 |
| X | DE 10 2014 016567 A1 (GM GLOBAL TECH OPERATIONS LLC [US]) 12 May 2016 (2016-05-12) * paragraphs [0031], [0049], [0051] - [0054]; figure 1 * ----- | 1-15 | |
| A | US 9 511 767 B1 (OKUMURA BUNYO [US] ET AL) 6 December 2016 (2016-12-06) * the whole document * ----- | 1-15 | |

TECHNICAL FIELDS
SEARCHED      (IPC)

B60W
G05D

The present search report has been drawn up for all claims

| Place of search | Date of completion of the search | Examiner |
|---|---|---|
| Munich | 30 June 2021 | Stolle, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 0227

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2021

| Patent document cited in search report | | Publication date | Patent family member(s) | Publication date |
|---|---|---|---|---|
| GB 2562376 | A | 14-11-2018 | DE 102018107515 A1<br>GB 2562376 A | 04-10-2018<br>14-11-2018 |
| DE 102014016567 | A1 | 12-05-2016 | NONE | |
| US 9511767 | B1 | 06-12-2016 | NONE | |

EPO FORM P0459

For more details about this annex : see Official Journal of the European Patent Office, No. 12/82